# EUROPEAN PATENT APPLICATION

(11) **EP 2 899 671 A1**
(43) Date of publication of application: **29.07.2015**
(21) Application number: 13838880.6
(22) Date of filing: 16.09.2013
(51) Int. Cl.: G06K 9/46, G06K 9/00, G06T 7/00

(54) **IDENTIFICATION METHOD AND DEVICE FOR TARGET OBJECT IN IMAGE**

(30) Priority: 21.09.2012 CN 201210360651
(71) Applicant: ZTE Corporation, Shenzhen, Guangdong 518057 (CN)
(72) Inventor: WANG, Qigui, Shenzhen Guangdong 518057 (CN); PENG, Yun, Shenzhen Guangdong 518057 (CN)
(74) Representative: Zinkler, Franz
(86) International application number: PCT/CN2013/083578
(87) International publication number: WO 2014/044158

(57) **Abstract**

Method and device for identifying a target object in an image are provided, which relate to the technology of image processing. The method includes: the points on the image are divided into a plurality of subsets according to areas and lines on an image; then the data matching on the data in each subset with the data of a target object which is stored in a database is conducted, so as to the target object corresponding to the data in the database is selected from the image; then the areas and lines corresponding to subsets which go beyond a set threshold are highlighted, therefore, the target object is highlighted, thereby the target object in the image is identified and highlighted.

## Description

### TECHNICAL FIELD

The present invention relates to the technology of image processing, and particularly to method and device for identifying a target object in an image.

### BACKGROUND

At present, when viewing an image, only the pattern which is formed by original shot can be viewed directly, and in some special application scenarios, users want to be able to focus on viewing a certain object in a group of images, for example, it is likely to focus on viewing buildings in images in an architectural research.

If a user needs to focus on viewing a certain object in images, he can only artificially search the object in the images, so that it is likely to make omissions, with poor user experience.

### SUMMARY

Embodiments of the present invention provide method and device for identifying a target object in an image, so as to implement identification and highlighting for the target object in the image.

According to an aspect of the present invention, a method for identifying a target object in an image is provided, the method includes:
the image is analyzed, and the points on the image are divided into a plurality of subsets according to areas and lines on the image;
data matching on the data in each subset with the data of a target object which is stored in a database is conducted, and the subsets of which the matching degree goes beyond a set threshold is determined; and
the areas and lines corresponding to the subsets which go beyond the set threshold are highlighted.

According to another aspect of the present invention, a device for identifying a target object in an image is provided, the device includes:
a dividing unit is configured to analyze an image, and, divide points on the image into a plurality of subsets according to areas and lines on the image;
a matching unit is configured to conduct data matching on the data in each subset with the data of a target object which is stored in a database, and determine the subsets of which the matching degree goes beyond a set threshold; and
a displaying unit is configured to highlight areas and lines corresponding to subsets which go beyond a set threshold.

Embodiments of the present invention provide method and device for identifying a target object in an image. The method includes: the points on the image are divided into a plurality of subsets according to areas and lines on an image; then the data matching on the data in each subset with the data of a target object which is stored in a database is conducted, so as to the target object corresponding to the data in the database is selected from the image; then the areas and lines corresponding to subsets which go beyond a set threshold are highlighted, therefore, the target object is highlighted, thereby the target object in the image is identified and highlighted.

### DESCRIPTION OF THE DRAWINGS

FIG. 1 shows a flowchart of a method for identifying a target object in an image according to an embodiment of the present invention;
FIG. 2 shows a flowchart of a preferred identification method for a target object in an image according to an embodiment of the present invention; and
FIG. 3 shows a structural schematic diagram of a device for identifying a target object in an image according to an embodiment of the present invention.

### DETAILED DESCRIPTION OF THE EMBODIMENTS

Embodiments of the present invention provide method and device for identifying a target object in an image. The method includes: the points on the image are divided into a plurality of subsets according to areas and lines on an image; then the data matching on the data in each subset with the data of a target object which is stored in a database is conducted, so as to the target object corresponding to the data in the database is selected from the image; then the areas and lines corresponding to subsets which go beyond a set threshold are highlighted, therefore, the target object is highlighted, thereby the target object in the image is identified and highlighted.

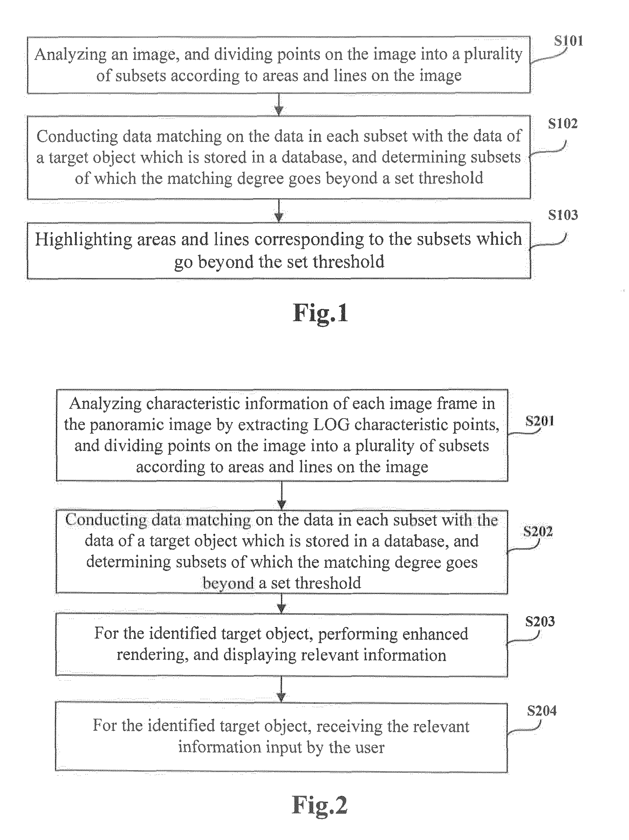

As shown in FIG. 1, an embodiment of the present invention provides a method for identifying a target object in an image, the method includes:
step S101, an image is analyzed, and the points on the image are divided into a plurality of subsets according to areas and lines on the image;
step S102, the data matching on the data in each subset with the data of a target object which is stored in a database is conducted, and the subsets of which the matching degree goes beyond a set threshold is determined; and
step S103, the areas and lines corresponding to the subsets which go beyond the set threshold are highlighted.

Hence, when the image is need to be displayed, firstly the image is analyzed and the data of areas and lines matching the data in the database are determined, and then the areas and lines are highlighted, so as to facilitate the user to identify the target object.

In the step S101, an image analysis is performed so as the points on the image are divided into different subsets, which include isolated points, continuous curves or continuous areas. The common methods for image analysis include LOG (Laplacian of Gaussian), Otsu (Maximum Between-Class Variance) algorithm, Bernsen (Bernsen algorithm), and LEVBB (Local Extreme Value Based Binarization), etc.

Here, Otsu algorithm will produce a binaryzation error to a histogram which is a single-peak or multi-peak image with staggered target and background pixel gray values; Bernsen algorithm can correct binaryzation, but it will produce a large number of ghosts, is sensitive to noise, and has disadvantages and problems such as partial missing of target and ghost; and LEVBB algorithm has better results, can effectively eliminate ghosts produced by Bernsen algorithm, and is insensitive to noise, but under strong illumination variation, part of results will be incorrect, and adhesion of characters in the text will occur.

LOG algorithm can resist strong illumination variation and noise interference, and well keep the original shape of the target, so as to obtain better effect. Detecting the edge zero crossing of image using LOG algorithm, determining the pixels at two sides of the edge zero crossing point to be a target or a background, and determining the attribution of homogeneous areas (background or target) in the image according to the neighborhood attributes. The method can overcome the problem of partial missing of target and ghosts in Bernsen, and it also overcome the disadvantage of Otsu algorithm of susceptibility to noise and uneven illumination, and LOG algorithm has better effect than LEVBB algorithm.

In the case that the system has high levels in aspects such as processing speed, memory capacity and stability, LOG characteristic point would be an ideal choice, and subset dividing can be implemented by extracting LOG characteristic points.

Thus, in the step S101, the step of analyzing an image and dividing points on the image into a plurality of subsets according to areas and lines on the image specifically includes:
the image is analyzed by Laplacian of Gaussian (LOG) algorithm, and the points on the image are divided into a plurality of subsets according to areas and lines on the image.

Accordingly, in the step S102, LOG characteristic sample data of a specific target object are stored in the database and the stored sample data cover the influences of various environmental changes (scale, rotation, illumination, blocking, etc.) on the image, and generally, the stored sample data can ensure the changes having high adaptability and robustness. For example, if performing supervised learning for the LOG characteristic sample of the image using a Ferns classifier constituted by a decision-making tree structure, it can further ensure that the stored sample data can ensure the changes having high adaptability and robustness.

In the step S103, the step of highlighting areas and lines corresponding to the subsets which go beyond the set threshold specifically includes:
the Enhanced rendering for areas and lines corresponding to the subsets which go beyond the set threshold is performed; and/or
the information corresponding to the subsets which go beyond the set threshold is displayed.

Here, when performing enhanced rendering, the data input to a renderer may be position matrix, and the data output from the renderer may be image data after enhanced rendering.

For the identified target object, the relevant information can be displayed, i.e., the information corresponding to the subsets which go beyond the set threshold is displayed. The relevant information contains characters, images, videos, and audios. When no relevant information is stored in the database, a user may input the relevant information, and at this time, before the step of displaying the information corresponding to the subsets which go beyond the set threshold, the following steps is also included:
the information corresponding to the subsets which go beyond the set threshold is acquired from the database; or
the information input by the user and corresponding to the subsets which go beyond the set threshold is acquired.

Certainly, there are many methods for highlighting the target object, e.g., displaying special marks and outlining with boxes, which are not described herein exhaustively.

When the image is a panoramic image, it needs to analyze each image frame in the panoramic image individually, specifically includes:
when the image is a panoramic image, in the step S101, the step of analyzing an image, and dividing points on the image into a plurality of subsets according to areas and lines on the image, specifically includes:
   each frame in the panoramic image is analyzed, and the points on each image frame are divided into a plurality of subsets according to areas and lines on the image; and
   in step S103, the step of highlighting areas and lines corresponding to the subsets which go beyond the set threshold specifically includes:
      determining whether areas and lines, which are the same as the areas and lines corresponding to the subsets which go beyond the set threshold on the current image frame, are displayed on the previous image frame, if yes, not displaying the areas and lines corresponding to the subsets which go beyond the set threshold on the current image frame, if no, highlighting the areas and lines corresponding to the subsets which go beyond the set threshold on the current image frame.

The method for identifying a target object in an image according to embodiments of the present invention will be described below in detail, with the identification for a target object in a panoramic image as an example, as shown in FIG. 2, the method includes:
step S201, the characteristic information of each image frame in the panoramic image is analyzed by extracting LOG characteristic points, and the points on the image are divided into a plurality of subsets according to areas and lines on the image;
step S202, the data matching on the data in each subset with the data of a target object which is stored in a database is conducted, and the subsets of which the matching degree goes beyond a set threshold is determined. For considering the influence of various environmental changes (scale, rotation, illumination, blocking, etc.) on the image during matching, supervised learning on the LOG characteristic samples of the image is performed by using a Ferns classifier constituted by a decision-making tree structure, so as to ensure the algorithm having high adaptability and robustness for the changes by sufficient supervised learning, thereby the identification of scene accomplished;
step S203, the operation of enhanced rendering is performed to the identified target object, and the relevant information about the identified target object is displayed, wherein the relevant information may include characters, images, videos, and audios;
during the process of enhanced rendering, the operation of splicing the previous and the latter image frames need to pay attention, if the previous image frame displays the information of the target object, then the latter image frame will not display the information of the target object;
step S204, for the identified target object, the relevant information input by the user is received, the relevant information may contain characters, images, videos, and audios.

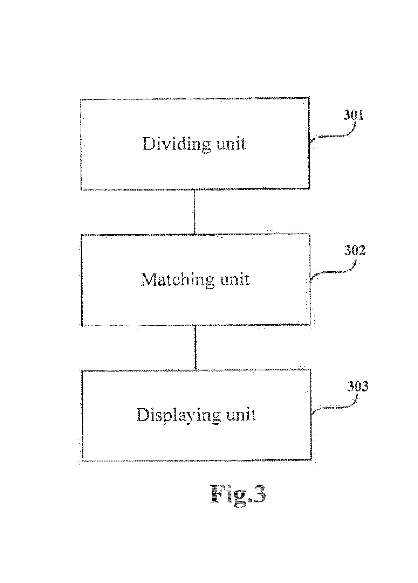

The embodiments of the present invention also provides a device for identifying a target object in an image accordingly, as shown in FIG. 3, the device includes:
a dividing unit 301 is configured to analyze an image, and according to areas and lines on the image, divide points on the image into a plurality of subsets;
a matching unit 302 is configured to conduct data matching on the data in each subset with the data of a target object which is stored in a database, and determine subsets of which the matching degree goes beyond a set threshold; and
a displaying unit 303 is configured to highlight areas and lines corresponding to the subsets which go beyond a set threshold.

Here, the dividing unit 301 is specifically configured to analyze the image by Laplacian of Gaussian (LOG) algorithm, and divide points on the image into a plurality of subsets according to areas and lines on the image.

The displaying unit 303 is specifically configured to perform enhanced rendering for areas and lines corresponding to the subsets which go beyond the set threshold; and/or

The displaying unit 303 is specifically configured to display information corresponding to the subsets which go beyond the set threshold.

The displaying unit 303 is also configured to, before displaying the information corresponding to the subsets which go beyond the set threshold, acquire the information corresponding to the subsets which go beyond the set threshold from the database; or

The displaying unit 303 is configured to, before displaying the information corresponding to the subsets which go beyond the set threshold, acquire the information input by the user and corresponding to the subsets which go beyond the set threshold.

When the image is a panoramic image, the dividing unit 301 is specifically configured to analyze each frame in the panoramic image, and divide points on each image frame into a plurality of subsets according to areas and lines on the image; and

The displaying unit 303 is specifically configured to determine whether areas and lines, which are the same as the areas and lines corresponding to the subsets which go beyond the set threshold on the current image frame, are displayed on the previous image frame, if yes, the areas and lines corresponding to the subsets which go beyond the set threshold on the current image frame is not displayed, if no, the areas and lines corresponding to the subsets which go beyond the set threshold on the current image frame are highlighted.

Embodiments of the present invention provide method and device for identifying a target object in an image. The method includes: the points on the image are divided into a plurality of subsets according to areas and lines on an image; then the data matching on the data in each subset with the data of a target object which is stored in a database is conducted, so as to the target object corresponding to the data in the database is selected from the image; then the areas and lines corresponding to subsets which go beyond a set threshold are highlighted, therefore, the target object is highlighted, thereby the target object in the image is identified and highlighted.

A skilled person in the art will understand that an embodiment of the disclosure may be provided as a method, a system, or a computer program product. Therefore, the present invention may take the form of an entire hardware embodiment, an entire software embodiment, or an embodiment combining software and hardware aspects. In addition, the present invention may take the form of a computer program product that is implemented on one or more computer-usable storage media (including but not limited to a disk memory, a CD-ROM, and an optical memory) containing computer-usable program codes.

The present disclosure is described with reference to a flowchart and/or a block diagram of a computer program product, an apparatus (system), and a method. It should be understood that each flow and/or block in the flowchart and/or the block diagram as well as combination of flows and/or blocks in the flowchart and/or the block diagram may be implemented via computer program instructions. These computer program instructions may be provided to a general computer, dedicated computer, embedded processor, or the processor of other programmable data processing apparatuses, to generate a machine, such that a device configured to implement the function designated in one or more flows in the flowchart and/or one or more blocks in the block diagram is generated through instructions executed by the processor of other programmable data processing apparatuses or a computer.

These computer program instructions can also be stored in computer readable storage capable of guiding a computer or other programmable data processing apparatuses to operate in a certain way, such that the instructions stored in the computer readable storage generate a manufacture including an instruction device which implements the function designated in one or more flows in the flowchart and/or one or more blocks in the block diagram.

These computer program instructions can also be loaded onto a computer or other programmable data processing apparatuses, so as to execute a series of operational steps on the computer (or other programmable data processing apparatuses) to generate computer-implemented processing, therefore the instructions executed on the computer (or other programmable apparatuses) provide the steps for implementing the function designated in one or more flows in the flowchart and/or one or more blocks in the block diagram.

Although preferred embodiments of the disclosure are described, a skilled person of the art may make alternative modifications and variations to these embodiments once he or she knows the basic inventive concept. Therefore, it is intended that the claims are interpreted as including the preferred embodiments and all modifications and variations falling within the scope of the disclosure.

Obviously, those skilled in the technical field can implement various modifications and improvements for the present invention, without departing from the scope of the present invention. Thus, if all the modifications and improvements belong to the scope of the claims of the present invention and the similar technologies thereof, the present invention is intended to contain the modifications and improvements.

## Claims

1. A method for identifying a target object in an image, **characterized by** comprising:
analyzing the image, and dividing points on the image into a plurality of subsets according to areas and lines on the image;
conducting data matching on the data in each subset with the data of a target object which is stored in a database, and determining subsets of which the matching degree goes beyond a set threshold; and
highlighting areas and lines corresponding to the subsets which go beyond the set threshold.

2. The method according to claim 1, **characterized in that** the step of analyzing the image, and according to areas and lines on the image, dividing points on the image into a plurality of subsets specifically comprises:
analyzing the image by Laplacian of Gaussian (LOG) algorithm, and dividing points on the image into a plurality of subsets according to areas and lines on the image.

3. The method according to claim 1, **characterized in that** the step of highlighting areas and lines corresponding to the subsets which go beyond the set threshold specifically comprises:
performing enhanced rendering for areas and lines corresponding to the subsets which go beyond the set threshold; and/or
displaying information corresponding to the subsets which go beyond the set threshold.

4. The method according to claim 3, **characterized in that** before displaying information corresponding to the subsets which go beyond the set threshold, also comprised is:
acquiring the information corresponding to the subsets which go beyond the set threshold from the database; or
acquiring the information input by the user and corresponding to the subsets which go beyond the set threshold.

5. The method according to claim 1, **characterized in that** when the image is a panoramic image, the step of analyzing the image, and according to areas and lines on the image, dividing points on the image into a plurality of subsets specifically comprises:
analyzing each frame in the panoramic image, and dividing points on each image frame into a plurality of subsets according to areas and lines on the image; and
the step of highlighting areas and lines corresponding to the subsets which go beyond the set threshold specifically comprises:
determining whether areas and lines, which are the same as the areas and lines corresponding to the subsets which go beyond the set threshold on the current image frame, are displayed on the previous image frame, when the determination result is yes, not displaying the areas and lines corresponding to the subsets which go beyond the set threshold on the current image frame, when the determination result is no, highlighting the areas and lines corresponding to the subsets which go beyond the set threshold on the current image frame.

6. A device for identifying a target object in an image, **characterized by** comprising:
a dividing unit , configured to analyze an image, and divide points on the image into a plurality of subsets according to areas and lines on the image;
a matching unit, configured to conduct data matching on the data in each subset with the data of a target object which is stored in a database, and determine the subsets of which the matching degree goes beyond a set threshold; and
a displaying unit, configured to highlight areas and lines corresponding to the subsets which go beyond a set threshold.

7. The device according to claim 6, **characterized in that** the dividing unit is further configured to analyze the image by Laplacian of Gaussian (LOG) algorithm, and divide points on the image into a plurality of subsets according to areas and lines on the image.

8. The device according to claim 6, **characterized in that**
the displaying unit is further configure to perform enhanced rendering for areas and lines corresponding to the subsets which go beyond the set threshold; and/or
the displaying unit is further configure to display information corresponding to the subsets which go beyond the set threshold.

9. The device according to claim 8, **characterized in that**
the displaying unit is further configure to, before displaying the information corresponding to the subsets which go beyond the set threshold, acquire the information corresponding to the subsets which go beyond the set threshold from the database; or
the displaying unit is further configure to, before displaying the information corresponding to the subsets which go beyond the set threshold, acquire the information input by the user and corresponding to the subsets which go beyond the set threshold.

10. The device according to claim 6, **characterized in that** when the image is a panoramic image,
the dividing unit is further configured to analyze each frame in the panoramic image, and divide points on each image frame into a plurality of subsets according to areas and lines on the image; and
the displaying unit is further configured to determine whether areas and lines, which are the same as the areas and lines corresponding to the subsets which go beyond the set threshold on the current image frame, are displayed on the previous image frame, when the determination result is yes, the displaying unit is not configured to display the areas and lines corresponding to the subsets which go beyond the set threshold on the current image frame, when the determination result is no, the displaying unit is configured to highlight the areas and lines corresponding to the subsets which go beyond the set threshold on the current image frame.
